# EUROPÄISCHE PATENTSCHRIFT

(11) **EP 0 828 547 B1**
(45) Veröffentlichungstag und Bekanntmachung des Hinweises auf die Patenterteilung: **02.01.2003**
(21) Anmeldenummer: 96907397.2
(22) Anmeldetag: 08.03.1996
(51) Int. Cl.: B01D 46/24, F02M 35/024, B01D 35/30

(54) **FILTER, INSBESONDERE LUFTFILTER FÜR DIE ANSAUGLUFT EINER BRENNKRAFTMASCHINE**
FILTER, ESPECIALLY AIR FILTER FOR THE INTAKE AIR OF AN INTERNAL COMBUSTION ENGINE
FILTRE, EN PARTICULIER FILTRE A AIR, POUR L'AIR D'ASPIRATION D'UN MOTEUR A COMBUSTION INTERNE

(30) Priorität: 01.06.1995 DE 19520156
(43) Veröffentlichungstag der Anmeldung: 18.03.1998
(73) Patentinhaber: FILTERWERK MANN & HUMMEL GmbH, 71631 Ludwigsburg (DE)
(72) Erfinder: ERNST, Volker, D-74343 Sachsenheim (DE); KLOTZ, Arthur, D-71686 Remseck (DE); LEIPELT, Rudolf, D-71672 Marbach (DE); SOMMER, Bruno, D-71636 Ludwigsburg (DE)
(74) Vertreter: Voth, Gerhard, Dipl.-Ing.
(86) Internationale Anmeldenummer: EP9601000
(87) Internationale Veröffentlichungsnummer: WO96038217

(56) Entgegenhaltungen:
- EP-A- 0 128 094
- DE-C- 3 514 778
- DE-C- 4 241 586
- US-A- 4 493 717

## Beschreibung

Die Erfindung betrifft ein Filter insbesondere ein Luftfilter für die Ansaugluft einer Brennkraftmaschine.

Aus der DE-PS 35 14 778 ist ein Filtereinsatz bekannt, bei dem das Filterelement aus einem sternförmig gefalteten Filterelement besteht. An den Endscheiben des Filterelements sind Stützrohre, angeordnet. Diese Stützrohre bestehen insbesondere aus Kunststoff und sind mit Verstärkungsringen versehen. Ein Nachteil dieses Filtereinsatzes besteht darin, daß ein Austausch des Filterelements nur gemeinsam mit den Stützrohren erfolgt.

Aus der EP A 128 094 ist ein Filterelement bekannt, welches Stege aufweist. Zwischen den Stegen kann eine Durchbiegung des Filterelements auftreten. Dies kann allerdings dadurch teilweise verbessert werden, dass eine Vielzahl von Stegen angeordnet sind. Damit wird jedoch die Durchlässigkeit des Filterelements beeinträchtigt.

Die US A 493 717 beschreibt ein Filter, welches ebenfalls Abstützungen aufweist. Auch hier besteht die Gefahr, dass die Durchbiegung des Filterelements zwischen den Abstützungen zu einer Deformation und damit zu einer Beeinträchtigung der Filterwirkung beiträgt. Gerade bei sehr langen Abstützelementen besteht ferner die Gefahr, dass diese durch den Filtratdruck an ihrem äußeren Ende sich in Richtung der Filterlängsachse bewegen und damit Dichtungsprobleme entstehen.

Es ist auch bekannt, ein Filterelement auf einem gelochten Blechstützrohr anzuordnen. Dieses Blechrohr ist jedoch als zusätzliches Element in einem Filtergehäuse erforderlich und bedeutet damit einen erhöhten Fertigungsaufwand und höhere Herstellkosten.

Der Erfindung liegt die Aufgabe zugrunde ein Filter zu schaffen, welches kostengünstig herstellbar ist, geringe Entsorgungskosten verursacht und druckstabil aufgebaut ist.

Diese Aufgabe wird ausgehend von dem Oberbegriff des Hauptanspruchs durch dessen kennzeichnenden Merkmale gelöst.

Ein wesentlicher Vorteil der Erfindung liegt darin, daß zusätzliche Stützelemente, Stützrohre oder ähnliches nicht erforderlich sind, da die Schwertabstützung ein Teil des Gehäuses ist. Damit entfällt auch eine Entsorgung solcher zusätzlichen Teile.

In einer vorteilhaften Ausgestaltung der Erfindung erstreckt sich die Schwertabstützung bis zur Position der größten Durchbiegung des Filtermediums, das heißt, näherungsweise bis in den mittleren Bereich des Filtermediums. Dabei erfolgt sowohl eine Abstützung dieses Bereichs als auch äußerer Bereiche über welche sich die Schwertabstützung erstreckt.

Erfindungsgemäß befindet sich am Deckel, welcher das Gehäuse verschließt, weitere Schwertabstützungen oder Fixierelemente für das Filtermedium. Dieser Deckel dient damit einerseits zur ergänzenden Positionierung des Filtermediums, andererseits zur Stabilisierung desselben.

Die Schwertabstützung sind mit Stützschuhen versehen. Durch diese Stützschuhe kann ein größerer Bereich des Filtermediums abgestützt werden. Gleichzeitig vermeiden die Stützschuhe punktuelle Belastungsspitzen im Abstützbereich.

Gemäß einer weiteren Ausgestaltung der Erfindung kann das Filtermedium mit sogenannten Leimraupen versehen sein. Diese Leimraupen verbessern die innere Stabilität des Filtermediums. Außerdem dienen diese als Auflagepunkte bzw. Auflageflächen für die Schwertabstützung.

In einer vorteilhaften Art und Weise kann der Deckel des Filters ohne zusätzliche Dichtelemente an dem Gehäuse befestigt werden. Hierzu sind an dem aus thermoplastischem Kunststoff bestehenden Deckel oder an dem ebenfalls aus thermoplastischem Kunststoff bestehenden Gehäuse Dichtlippen angeformt. Diese Dichtlippen können zusätzlich als Labyrinthdichtungen ausgebildet sein.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird. Ausführungsbeispiele der Erfindung sind in den Zeichnungen dargestellt und werden im folgenden näher erläutert. Die Zeichnungen zeigen:
- Figur 1: zwei Halbschnittdarstellungen eines Filters,
- Figur 2: den Ausschnitt einer Seitenansicht,
- Figur 3: die Variante eines Verschlußelements.

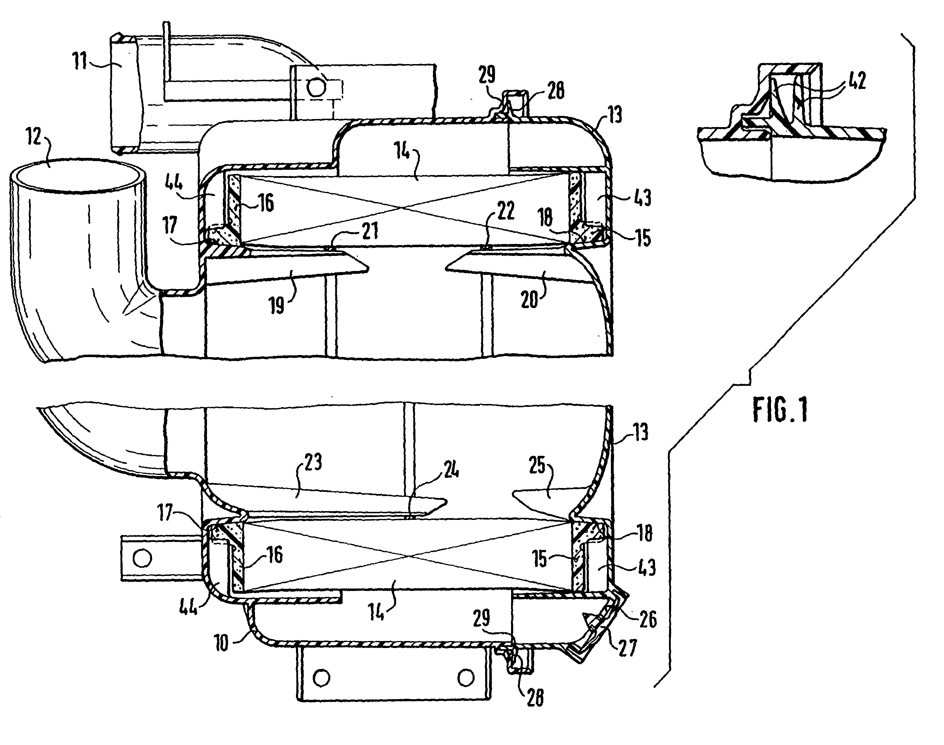

Das Filter gemäß Figur 1 besteht aus einem Filtergehäuse 10 welches einen Rohlufteinlaß 11, einen Reinluftauslaß 12 sowie einen Deckel 13 aufweist. Das Gehäuse und der Deckel sind vorteilhafterweise aus thermoplastischem Kunststoff im Spritzgießverfahren hergestellt. In dem Gehäuse befindet sich ein Filterelement 14 welches aus sternförmig gefaltetem Filterpapier (Filtermedium) hergestellt ist. Dieses Filterelement weist an den stirnseitigen Endflächen Dichtscheiben 15, 16 auf. Diese bestehen beispielsweise aus Polyurethanweichschaum. Die Dichtscheiben dienen zum einen zur Abdichtung der Stirnseiten zum anderen zur Abdichtung des Filterelements 14 an radialen Dichtflächen 17, 18 des Gehäuses bzw. des Deckels. Im oberen Halbschnitt ist sowohl Gehäuse 10 als auch Deckel 13 mit jeweils einer Schwertabstützung 19, 20 vorgesehen. Jede dieser Schwertabstützung erstreckt sich bis zu etwa einem Drittel der Länge des Filterelements 14 in dessen inneren Hohlraum. Das Filterelement 14 ist mit sogenannten Leimraupen 21, 22 versehen. An diesen Leimraupen liegt die jeweilige Schwertabstützung an. Im unteren Halbschnitt ist das Filtergehäuse mit einer Schwertabstützung 23 ausgestattet. Diese erstreckt sich bis zur axialen Mitte des Filterelements 14. Auch dort weist das Filterelement eine Leimraupe 24 auf an welcher die Schwertabstützung 23 anliegt. Im unteren Halbschnitt ist der Deckel 13 lediglich mit einem Fixierelement 25 versehen. Dieses hat die Aufgabe, das Filterelement 14 beim Schließen des Deckels 13 zu positionieren. Der Deckel 13 ist im unteren Bereich mit einer Öffnung 26 versehen. Diese Öffnung 26 ist mit einem Schirmventil 27 verschlossen und dient zum Austragen von Grobschmutz. Zur Abdichtung zwischen Deckel 13 und Filtergehäuse 10 ist an der Kontaktfläche der Deckel mit einer Lippendichtung 28 ausgerüstet. Diese Lippendichtung liegt mit einer Vorspannung an der Dichtfläche 29 des Gehäuses an und sorgt für eine zuverlässige Abdichtung des Rohluftbereichs des Luftfilters.

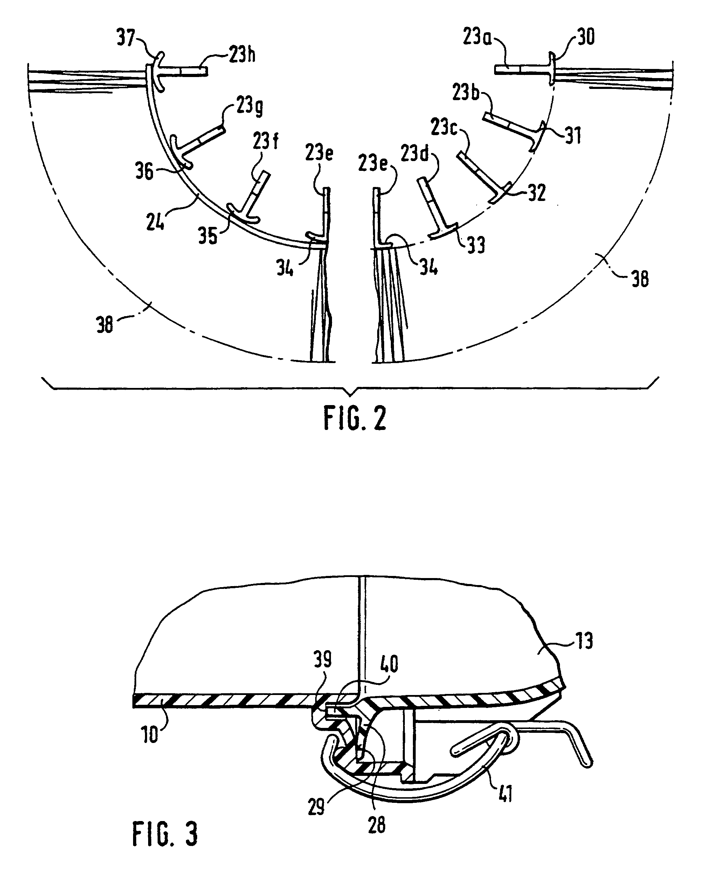

Figur 2 zeigt im Ausschnitt einer Seitenansicht Schwertabstützungen 23a bis 23g. Diese Schwertabstützungen sind mit Stützschuhen 30 bis 37 versehen, wobei die Stützschuhe, wie rechtsseitig dargestellt, unmittelbar an dem zick-zack-förmig gefalteten Filtermedium 38 anliegen können als auch an der auf das Filtermedium 38 aufgebrachten Leimraupe 24.

Figur 3 zeigt die Variante eines Verschlußelements. Das Verschlußelement dient zum Fixieren des Deckels 13 an dem Gehäuse 10. Auch hier ist der Deckel 13 mit einer Lippendichtung 28 versehen, welche auf der Dichtfläche 29 des Filtergehäuses aufliegt. Die radiale Fixierung des Deckels auf dem Filtergehäuse erfolgt mit einer Ringnut 39 am Gehäuse 10. In diese Ringnut erstreckt sich ein Absatz 40 des Deckels. Dieser Absatz 40 liegt am Boden der Ringnut auf und definiert damit den axialen Endanschlag des Deckels 13. Somit wird eine überdehnung der Lippendichtung vermieden. Als Verschlußelement kann beispielsweise ein Drahtbügelverschluß 41 gewählt werden. Selbstverständlich sind auch andere Varianten wie Schnappverschlüsse, Rastverschlüsse oder ähnliches möglich.

## Patentansprüche

1. Filter, insbesondere Luftfilter bestehend aus einem Gehäuse mit einem Rohlufteinlaß und einem Reinluftauslaß, einem in dem Gehäuse (10) angeordneten Filterelement aus einem insbesondere zick-zack-förmig gefalteten Filtermedium, wobei wenigstens ein Abstützelement vorgesehen ist, welches das Filtermedium im Bereich der Reinluftseite abstützt, **dadurch gekennzeichnet, daß** das Abstützelement aus am Gehäuse angeordnete Schwertabstützungen (19, 20, 23, 25) besteht, wobei die Schwertabstützungen (19, 20, 23, 25 ) Stützschuhe (30 -37 ) aufweisen, wobei das Gehäuse (10) mit einem Deckel (13) verschließbar ist und wobei der Deckel (13) weitere Schwertabstützungen oder Fixierelemente (25) für das Filterelement (14) aufweist.

2. Filter, nach Anspruch 1, **dadurch gekennzeichnet, daß** die Schwertabstützung (19) sich bis zur Position der größten Durchbiegung des Filterelements (14) erstreckt.

3. Filter, nach einem der vorherigen Ansprüche, **dadurch gekennzeichnet, daß** das Filterelement (14) insbesondere im Bereich der größten Durchbiegung mit den Schwertabstützungen (19, 23) in Kontakt stehende Auflageflächen insbesondere Leimrauben (24) aufweist.

4. Filter, insbesondere nach einem der vorherigen Ansprüche, **dadurch gekennzeichnet, daß** der Deckel (13) abdichtend an das Gehäuse (10) befestigt ist, wobei das Dichtelement aus einer an Gehäuse und/oder Deckel integrierten Dichtlippe (28) besteht, die so ausgebildet ist, dass die nötige Verspannung, unabhängig von Maßtoleranzen und Verformungen, leicht einzugrenzen ist.

5. Filter, nach Anspruch 4, **dadurch gekennzeichnet, daß** die Dichtlippe als Labyrinthdichtung (42) ausgebildet ist.

6. Filter nach einem der vorherigen Ansprüche, **dadurch gekennzeichnet, daß** das Filterelement durch Rippen (43, 44) die zusammen mit den Dichtflächen (17, 18) je eine Art keilförmige Kammer bilden axial gehalten, bzw. leicht verspannt ist.

## Claims

1. Filter, more especially an air filter, comprising a housing having an unfiltered air inlet and a filtered air outlet, a filter element which is disposed in the housing (10) and is formed from a filter medium which is folded more especially in a zigzag-shaped manner, at least one supporting means being provided, which supports the filter medium in the region of the filtered air side, **characterised in that** the supporting means comprises tongue-like supports (19, 20, 23, 25) disposed on the housing, the tongue-like supports (19, 20, 23, 25) having supporting shoes (30-37), the housing (10) being closable with a cover (13), and the cover (13) having additional tongue-like supports or securing elements (25) for the filter element (14).

2. Filter according to claim 1, **characterised in that** the tongue-like support (19) extends to the position of the greatest bending of the filter element (14).

3. Filter according to one of the previous claims, **characterised in that** the filter element (14), more especially in the region of the greatest bending, has bearing surfaces, more especially glue beads (24), which are in contact with the tongue-like supports (19, 23).

4. Filter, more especially according to one of the previous claims, **characterised in that** the cover (13) is sealingly mounted on the housing (10), the sealing means comprising a sealing lip (28), which is incorporated in the housing and/or cover and is so configured that the necessary tension, irrespective of dimensional tolerances and deformations, can be easily located.

5. Filter according to claim 4, **characterised in that** the sealing lip is in the form of a labyrinth seal (42).

6. Filter according to one of the previous claims, **characterised in that** the filter element is axially retained, or respectively slightly tensioned, by ribs (43, 44) which, together with the sealing faces (17, 18), each form a respective type of wedge-shaped chamber.

## Revendications

1. Filtre notamment filtre à air formé d'un boîtier avec une entrée d'air non filtré et une sortie d'air filtré, un élément de filtre placé dans le boîtier (10), cet élément étant formé d'un milieu filtrant, plié, notamment en zigzag, et d'au moins un élément d'appui qui soutient le milieu filtrant du côté de l'air filtré,
**caractérisé en ce que**
l'élément d'appui se compose de languettes d'appui (19, 20, 23, 25) prévues sur le boîtier ;
les languettes d'appui (19, 20, 23, 25) comportent des patins de protection (30, 37) ;
le boîtier (10) se ferme avec un couvercle (13) et le couvercle (13) comporte plusieurs languettes d'appui ou éléments de fixation (25) pour l'élément de filtre (14).

2. Filtre selon la revendication 1,
**caractérisé en ce que**
la languette d'appui (19) s'étend jusqu'à la position correspondant au fléchissement le plus important de l'élément de filtre (14).

3. Filtre selon l'une des revendications précédentes,
**caractérisé en ce que**
l'élément de filtre (14) comporte en particulier dans la zone de son plus grand fléchissement, des surfaces d'appui, notamment des cordons de colle (24) venant en contact avec les languettes d'appui (19, 23).

4. Filtre notamment selon l'une des revendications précédentes,
**caractérisé en ce que**
le couvercle (13) est fixé de manière étanche au boîtier (10), l'élément d'étanchéité se composant d'une lèvre d'étanchéité (28) intégrée au boîtier et/ou au couvercle, cette lèvre limitant facilement le serrage nécessaire, indépendamment des tolérances de mesure et des déformations.

5. Filtre selon la revendication 4,
**caractérisé en ce que**
la lèvre d'étanchéité est un joint en labyrinthe (42).

6. Filtre selon l'une des revendications précédentes,
**caractérisé en ce que**
l'élément de filtre est tenu ou légèrement serré par les cordons (43, 44) formant avec les surfaces d'étanchéité (17, 18) une sorte de chambre en coin.
